# EUROPEAN PATENT SPECIFICATION

(11) **EP 4 406 793 B1**
(45) Date of publication and mention of the grant of the patent: **18.11.2026**
(21) Application number: 23829408.6
(22) Date of filing: 16.02.2023
(51) Int. Cl.: B60W 30/06, G06V 20/58, G06T 7/70

(54) **PATH PLANNING METHOD AND DEVICE FOR AUTONOMOUS PARKING OF VERTICAL AND DIAGONAL PARKING SPACES**
WEGPLANUNGSVERFAHREN UND VORRICHTUNG ZUM AUTONOMEN EINPARKEN VON VERTIKALEN UND DIAGONALEN PARKLÜCKEN
PROCÉDÉ ET DISPOSITIF DE PLANIFICATION DE TRAJECTOIRE À DES FINS DE STATIONNEMENT AUTONOME D'EMPLACEMENTS DE STATIONNEMENT VERTICAUX ET DIAGONAUX

(30) Priority: 30.06.2022 CN 202210779054
(43) Date of publication of application: 31.07.2024
(73) Proprietor: Chongqing Changan Automobile Co., Ltd., Chongqing 400023 (CN)
(72) Inventor: YANG, Jian, Chongqing 400023 (CN); TIAN, Xiaokang, Chongqing 400023 (CN); WAN, Kailin, Chongqing 400023 (CN); DANG, Jianmin, Chongqing 400023 (CN); REN, Fan, Chongqing 400023 (CN)
(74) Representative: Schulz Junghans Patentanwälte PartGmbB
(86) International application number: PCT/CN2023/076408
(87) International publication number: WO 2024/001215

(56) References cited:
- WO-A1-2019/181264
- CN-A- 106 945 662
- CN-A- 107 776 570
- CN-A- 109 720 342
- CN-A- 109 927 715
- CN-A- 110 271 539
- CN-A- 112 092 804
- CN-A- 112 092 804
- CN-A- 112 141 091
- CN-A- 114 132 305
- CN-A- 114 132 305
- CN-A- 114 274 952
- CN-A- 114 347 982
- CN-A- 114 523 959
- CN-A- 115 056 765
- DE-A1- 102018 117 725
- KR-A- 20120 022 485

## Description

### Field of the Invention

The present disclosure relates to the technical field of automatic parking of automobiles, and in particular to a path planning method for autonomous parking in perpendicular and diagonal parking spaces, an apparatus, and an automobile.

### Background of the Invention

In recent years, with the rise of intelligent driving, the automatic parking system is increasingly popular, which solves many difficult parking problems. However, the price of laser radar and the calculation power of the controller are not enough to support the mass production of path planning algorithms such as heuristic search. At present, the sensing system combined with ultrasonic radar and camera as well as a geometric path planning algorithm is used as the choice of the mass-produced automatic parking system.

In the existing mass-produced sensor architecture, many automobile models use the sensor architecture combining ultrasonic radar with a camera to detect parking spaces and targets. Based on the existing framework, the detection distance and performance for an unknown space are limited when parking is activated, and the parking environment is complex. Only when vehicles enter a certain range of parking spaces, the detection fusion results of ultrasonic radar and camera are closer to the true value. Therefore, an adaptive parking path planning method and system based on real-time detected results is to be designed in the back-in stage. CN 114 274 952 discloses a path planning method for autonomous parking in perpendicular and diagonal parking spaces, comprising the steps of processing, after a parking space is found, initially detected obstacle information based on input of an ultrasonic wave and a camera to obtain four point coordinates of a quadrilateral parking space and a target parking position, the four point coordinates of the quadrilateral parking space; establishing, based on Ackerman steering principle, a vehicle dynamics model to obtain a minimum turning radius of a vehicle, the path planning taking R = Rmin + Rmargin with Rmargin being a calibration value; activating, in a case that the vehicle arrives at a stopping point, a path planning system, and performing path planning and path tracking;calculating, according to the initially detected information and an attitude of the vehicle, a back-in path using a geometric method; and identifying a final back-in stage, updating the target parking position according to real-time detected information, and starting real-time planning, wherein in step, the final back-in stage is identified by determining whether an end position of a backward path is consistent with the target parking position stored during the planning.

### Summary of the Invention

For the above deficiencies of the prior art, the technical problem to be solved by the present disclosure is how to provide a path planning method for autonomous parking in perpendicular and diagonal parking spaces by detecting during the vehicle back-in stage and combining with real-time path planning for more efficient and accurate parking.

In order to solve the above technical problem, the present disclosure adopts the following technical solutions:
A path planning method for autonomous parking in perpendicular and a diagonal parking spaces, including the following steps:
(1) processing, after a parking space is found, initially detected obstacle information based on input of an ultrasonic wave and a camera to obtain four point coordinates of a quadrilateral parking space and a target parking position, the four point coordinates of the quadrilateral parking space being set as P1, P2, P3, and P4;
(2) establishing, based on Ackerman steering principle, a vehicle dynamics model to obtain a minimum turning radius Rₘᵢₙ of a vehicle, the path planning taking R = Rₘᵢₙ + R_{margin} with R_{margin} being a calibration value;
(3) activating, in a case that the vehicle arrives at a stopping point, a path planning system, and performing path planning and path tracking;
(4) calculating, according to the initially detected information and an attitude (X, Y, θ) of the vehicle, a back-in path using a geometric method; and
(5) identifying a final back-in stage, updating the target parking position according to real-time detected information, and starting real-time planning.

As an optimization, in step (1), the target parking position is located within the parking space and separated from a border of the parking space.

As an optimization, in step (2), the minimum turning radius Rₘᵢₙ of the vehicle is solved as: ${R}_{min} = \frac{L}{t an \left({θ}_{max}\right)} ,$ where L is an axle base; *θₘₐₛₖ* represents a maximum front wheel steering angle of the vehicle; Rₘᵢₙ represents the minimum turning radius; and R_{margin} is from 20 cm to 100 cm.

As an optimization, in step (4), a back-in stopping point StopP capable of back in stall parking is calculated according to a current vehicle position and current parking space information as follows: $\begin{matrix}α = a cos \left(\frac{{P}_{2 y} - Y - R}{R - Car Width / 2 - Safe Margin}\right) \\ {StoP}_{x} = \left(R-Car Width/2-Safe Margin\right) * sin \left(α\right) + {P}_{2 x} \\ {StoP}_{y} = Y\end{matrix} ,$ where R is the minimum turning radius calculated in the above formula; X, Y are current vehicle coordinates; CarWidth is a width of the vehicle; and SafeMargin is a safety threshold.

As an optimization, in step (4), the back-in path is calculated using the geometric method and according to a current parking space size, a current vehicle position, and the target parking position; a one-step back-in trajectory is generated if the target parking position is reachable from the current vehicle position using geometric line segments of a linear arc straight line without colliding with parking space boundaries; otherwise, the arc is planned based on the point coordinates P2, with point coordinates P1 and P3 of the parking space boundaries as end constraints.

As an optimization, in step (4), according to the current parking space size, a current vehicle stopping point position, and the target parking position, an optimal path is searched by traversing the turning radiusturning and taking the shortest path as a cost function.

As an optimization, in step (5), the final back-in stage is identified by determining whether an end position of a backward path is consistent with the target parking position stored during the planning.

As an optimization, in step (5), when parking is in the final back-in stage, trajectory errors previously planned are determined after a rear axle of the vehicle is back-in by comparing the latest target parking position calculated according to the real-time detected information with the stored target parking position; if the errors are large, the latest target parking position is updated, and a flag starting the real-time planning is output; according to the current vehicle position, the latest target parking position, and an ultrasonic radar detection distance, the path is re-planned using a geometric relationship, with planning constraint conditions that the target parking position does not collide with the parking space boundaries.

An electronic device for implementing a path planning method for autonomous parking in perpendicular and a diagonal parking spaces includes a memory, configured to store executable instructions; and
a processor, configured to execute the executable instructions stored in the memory to implement the above path planning method for autonomous parking in perpendicular and a diagonal parking spaces.

A computer-readable storage medium stores thereon computer program instructions, the computer program instructions executing the above path planning method for autonomous parking in perpendicular and a diagonal parking spaces.

An automobile applies the above path planning method for autonomous parking in perpendicular and a diagonal parking spaces.

In view of the above, the advantageous effects of the present disclosure are as follows: the present disclosure has the following advantages:
(1) Based on the dynamic constraints, combined with the treatment of arc straight line, the feasibility and stability of the path are guaranteed. At the same time, according to the real-time detected information of the last step, the target parking position is updated, the real-time path planning is performed, the parking success rate and parking accuracy are improved, and the parking time is saved.
(2) By establishing a vehicle dynamics model and real-time path planning, the defects of large detection error of ultrasonic radar and camera when not entering the storage are remedied, improving parking efficiency and parking accuracy.

### Brief Description of the Drawings

In order to make the objects, technical solutions, and advantages of the present disclosure more apparent, the present disclosure is further described in detail in combination with the drawings, in which:
Fig. 1 is a diagram of an ultrasonic radar distribution of a vehicle of the present disclosure;
Fig. 2 is a diagram of a path planning process of the present disclosure; and
Fig. 3 is a diagram of a real-time planning solution of the present disclosure.

### Detailed Description of the Embodiments

The present disclosure is described in further detail in combination with the drawings.

The path planning method for autonomous parking in perpendicular and a diagonal parking spaces in the specific implementation includes the following steps:
(1) processing, after a parking space is found, initially detected obstacle information based on input of an ultrasonic wave and a camera to obtain four point coordinates of a quadrilateral parking space and a target parking position, the four point coordinates of the quadrilateral parking space being set as P1, P2, P3, and P4;
(2) establishing, based on Ackerman steering principle, a vehicle dynamics model to obtain a minimum turning radius Rₘᵢₙ of a vehicle, and the path planning being R = Rₘᵢₙ + R_{margin} with R_{margin} being a calibration value considering steering characteristics and for the convenience of path tracking;
(3) activating, in a case that the vehicle arrives at a stopping point, a path planning system, and performing path planning and path tracking; the vehicle being in a stationary state during path planning, and the vehicle position, parking space information, and target parking position used being subject to the information at the planning moment.
(4) calculating, according to the initially detected information and an attitude (X, Y, θ) of the vehicle, a back-in path using a geometric method; and
(5) identifying a final back-in stage, updating the target parking position according to real-time detected information, and starting real-time planning.

In the specific implementation, in step (1), the target parking position is located within the parking space and separated from a border of the parking space.

In the specific implementation, in step (2), the minimum turning radius Rₘᵢₙ of the vehicle is solved as: ${R}_{min} = \frac{L}{t an \left({θ}_{max}\right)} ,$ where L is an axle base; *θ*ₘₐₓ represents a maximum front wheel steering angle of the vehicle; Rₘᵢₙ represents the minimum turning radius; and R_{margin} is from 20 cm to 100 cm.

In the specific implementation, in step (4), a back-in stopping point StopP capable of back in stall parking is calculated according to a current vehicle position and current parking space information as follows: $\begin{matrix}α = a cos \left(\frac{{P}_{2 y} - Y - R}{R - Car Width / 2 - Safe Margin}\right) \\ {StoP}_{x} = \left(R-Car Width/2-Safe Margin\right) * sin \left(α\right) + {P}_{2 x} \\ {StoP}_{y} = Y\end{matrix} ,$ where R is the minimum turning radius calculated in the above formula; X, Y are current vehicle coordinates; CarWidth is a width of the vehicle; and SafeMargin is a safety threshold.

In the specific implementation, in step (4), the back-in path is calculated using the geometric method and according to a current parking space size, a current vehicle position, and the target parking position; a one-step back-in trajectory is generated if the target parking position is reachable from the current vehicle position using geometric line segments of a linear arc straight line without colliding with parking space boundaries; otherwise, the arc is planned based on the point coordinates P2, with point coordinates P1 and P3 of the parking space boundaries as end constraints.

In the specific implementation, in step (4), according to the current parking space size, a current vehicle stopping point position, and the target parking position, an optimal path is searched by traversing the turning radius and taking the shortest path as a cost function.

In the specific implementation, in step (5), the final back-in stage is identified by determining whether an end position of a backward path is consistent with the target parking position stored during the planning.

In the specific implementation, in step (5), when parking is in the final back-in stage, trajectory errors previously planned are determined after a rear axle of the vehicle is back-in by comparing the latest target parking position calculated according to the real-time detected information with the stored target parking position; if the errors are large, the latest target parking position is updated, and a flag starting real-time planning is output; according to the current vehicle position, the latest target parking position, and an ultrasonic radar detection distance, the path is re-planned using a geometric relationship, with planning constraint conditions that the target parking position does not collide with the parking space boundaries.

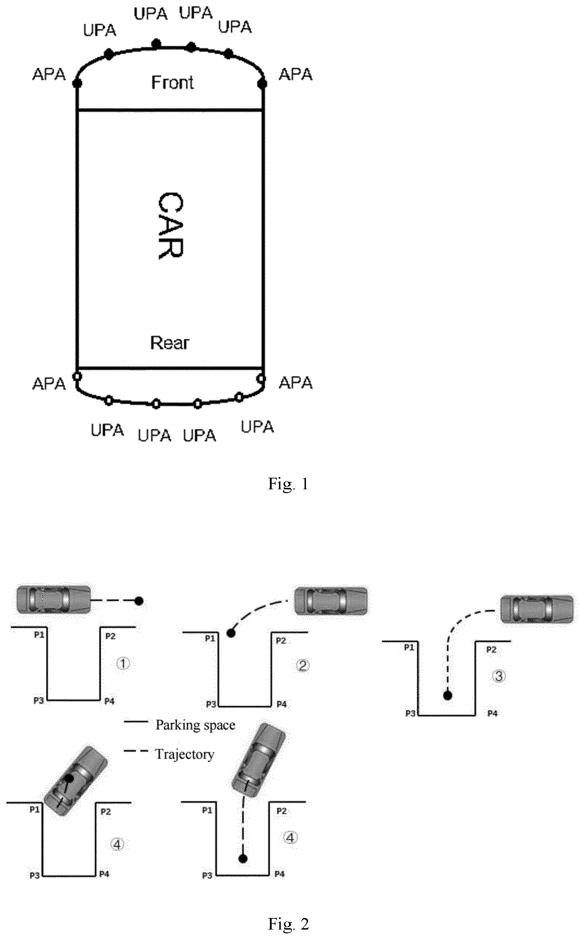

As shown in Fig. 1, there is provided the vehicle ultrasonic radar installation position. Clearance angle radar and the camera detect the surrounding environment of the parking space in recognizing the parking space.

As shown in Fig. 2, there is provided the parking path planning method in step (4) of the present disclosure. ① is a calculated back-in stopping point; ② shows that when the parking space is not sufficient to support the planning of a linear arc straight line directly reaching the target parking position, a circle is bypassed on the basis of a point coordinate P2, and radian-turning traversal planning is performed with parking space boundary point coordinates P1 and P3 as end constraint boundaries; ③ shows that when the parking space width supports one-step back-in, the path of the linear arc straight line is planned to directly reach the target parking position; ④ shows that traversing different turning radius forward, the radian is turned to traverse, and the constraint condition is that the next step can be reached in a form of an arc straight line; and ⑤ shows that an arc is planned with the target parking position direction as the ending constraint condition, and a straight line is planned with the target parking position as the ending constraint condition.

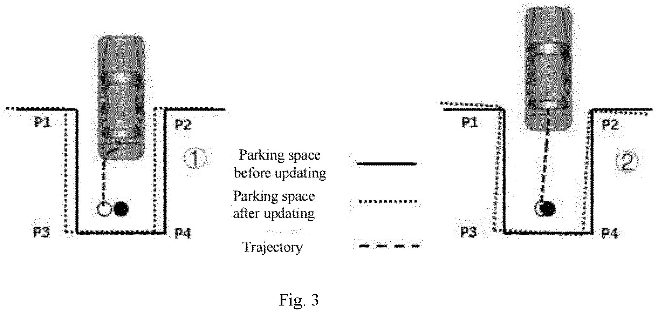

As shown in Fig. 3, there is provided a diagram of a real-time planning solution of the present disclosure. After a rear axle of the vehicle is back-in, the detected result at this moment is more reliable; when the difference between the real-time detected parking space and the original detected parking space is extremely large, the path is corrected by starting real-time planning, and the details are as follows: different geometric plans are selected through the difference relationship between the real-time detected parking space and the original detected parking space. ① shows that when the difference in parking space is only lateral error, the geometric path of an arc straight line is used. Considering that the vehicle cannot make excessive steering in the parking space, Rᵣₜ= 2R is selected as the steering radius for the planning. The solving process is as follows:
The center O₁ of the first arc is solved: ${O}_{1 x} = X + {R}_{rt} * cos \left(θ+\frac{π}{2}\right) ,$ ${O}_{1 y} = Y + {R}_{rt} * sin \left(θ+\frac{π}{2}\right)$ where X, Y, and θ are the current coordinates of the vehicle; O₁ₓ O_{1y} is the coordinate of the center of the first arc; and Rᵣₜ is the radius of the arc.

The central angle β traversed by the arc is solved: $β = a cos \left(1-\frac{dis}{2 * {R}_{rt}}\right) ,$ where dis is the lateral error between the real-time detected parking space and the original detected parking space; and Rᵣₜ is the radius of the arc.

The end point EndP₁ of the first arc is solved: ${EndP}_{1 x} = {O}_{1 x} - {R}_{rt} * cos \left(θ+β+\frac{π}{2}\right)$ ${EndP}_{1 Y} = {O}_{1 Y} - {R}_{rt} * sin \left(θ+β+\frac{π}{2}\right)$

The center O₂ of the second arc is solved: ${O}_{2 x} = {EndP}_{1 x} - {R}_{rt} * cos \left(θ+β+\frac{π}{2}\right)$ ${O}_{2 y} = {EndP}_{1 y} - {R}_{rt} * sin \left(θ+β+\frac{π}{2}\right)$

The end point EndP₂ of the second arc is solved: ${EndP}_{2 x} = {O}_{2 x} + {R}_{rt} * cos \left(Tar get Yaw+\frac{π}{2}\right) ,$ ${EndP}_{2 Y} = {O}_{2 Y} + {R}_{rt} * sin \left(Target Yaw+\frac{π}{2}\right)$ where TargetYaw is the target parking heading angle.

The final straight line end point is the target parking position, and the planning is completed.

② shows that when the difference of parking space is lateral error and heading angle error, the arc straight line is used for planning. Firstly, the intersection point crossP of the straight line on which the vehicle is located and the straight line on which the latest target parking position is located is calculated; the arc radius Rᵣₜ of the planning is solved: $dis = sqrt \left({\left(X-{crossP}_{x}\right)}^{2}+{\left(Y-{crossP}_{y}\right)}^{2}\right)$ ${R}_{rt} = \frac{di s}{abs \left(t an\left(\left(Tar get Yaw-θ\right)/2\right)\right)}$

The arc center O is solved: ${O}_{x} = X - {R}_{rt} * cos \left(θ+\frac{π}{2}\right)$ ${O}_{y} = Y - {R}_{rt} * sin \left(θ+\frac{π}{2}\right)$

The arc end point EndP is solved: ${EndP}_{x} = {O}_{x} + {R}_{rt} * cos \left(Target Yaw+\frac{π}{2}\right)$ ${EndP}_{Y} = {O}_{Y} + {R}_{rt} * sin \left(Target Yaw+\frac{π}{2}\right)$

The final straight line end point is the target parking position, and the planning is completed.

The method improves the traditional geometric methods and designs a final real-time path planning method and system for perpendicular and diagonal parking considering the characteristics of existing platforms and sensors. Compared with the traditional geometric planning methods, in the case of inaccurate detection of the initial parking space, vehicles need to be re-planned with head-out and back-in to complete parking after back-in; at this time, the final real-time path planning system is more efficient. The present disclosure combines the detection performance of the existing intelligent driving vehicle; the detection of the parking space by the final sensor is more accurate; real-time path planning using the real-time detected result is added; and the case where the detection of the initial parking space is not accurate does not need head-out adjustment again, thereby improving the parking efficiency.

An electronic device for implementing a path planning method for autonomous parking in perpendicular and a diagonal parking spaces includes a memory, configured to store executable instructions; and
a processor, configured to execute the executable instructions stored in the memory to implement the above path planning method for autonomous parking in perpendicular and a diagonal parking spaces.

A computer-readable storage medium stores thereon computer program instructions, the computer program instructions executing the above path planning method for autonomous parking in perpendicular and a diagonal parking spaces.

Finally, it is noted that the above embodiments illustrate rather than limit the present disclosure. Although the present disclosure has been described by reference to preferred embodiments of the present disclosure, the skilled in the prior art should appreciate that various changes in form and details may be made therein without departing from the scope of the present disclosure as defined by the appended claims.

## Claims

1. A path planning method for autonomous parking in perpendicular and diagonal parking spaces, comprising the following steps:
(1) processing, after a parking space is found, initially detected obstacle information based on input of an ultrasonic wave and a camera to obtain four point coordinates of a quadrilateral parking space and a target parking position, the four point coordinates of the quadrilateral parking space being set as P1, P2, P3, and P4;
(2) establishing, based on Ackerman steering principle, a vehicle dynamics model to obtain a minimum turning radius Rₘᵢₙ of a vehicle, the path planning taking R = Rₘᵢₙ + R_{margin} with R_{margin} being a calibration value;
(3) activating, in a case that the vehicle arrives at a stopping point, a path planning system, and performing path planning and path tracking;
(4) calculating, according to the initially detected information and an attitude (X, Y, θ) of the vehicle, a back-in path using a geometric method; and
(5) identifying a final back-in stage, updating the target parking position according to real-time detected information, and starting real-time planning,
wherein in step (5), the final back-in stage is identified by determining whether an end position of a backward path is consistent with the target parking position stored during the planning,
wherein in step (5), when parking is in the final back-in stage, trajectory errors previously planned are determined, after a rear axle of the vehicle is back-in, by comparing a latest target parking position calculated according to the real-time detected information with the stored target parking position; if the errors are large, the latest target parking position is updated, and a flag starting the real-time planning is output; according to the current vehicle position, the latest target parking position, and an ultrasonic radar detection distance, the path is re-planned using a geometric relationship, with planning constraint conditions that the target parking position does not collide with the parking space boundaries.

2. The path planning method for autonomous parking in perpendicular and diagonal parking spaces according to claim 1, wherein in step (1), the target parking position is located within the parking space and separated from a border of the parking space.

3. The path planning method for autonomous parking in perpendicular and diagonal parking spaces according to claim 1, wherein in step (2), the minimum turning radius Rₘᵢₙ of the vehicle is solved as: ${R}_{min} = \frac{L}{t an \left({θ}_{max}\right)} ,$ wherein L is an axle base, *θ*ₘₐₓ represents a maximum front wheel steering angle of the vehicle, Rₘᵢₙ represents the minimum turning radius, and R_{margin} is from 20 cm to 100 cm.

4. The path planning method for autonomous parking in perpendicular and diagonal parking spaces according to claim 1, wherein in step (4), a back-in stopping point StopP capable of back in stall parking is calculated according to a current vehicle position and current parking space information as follows: $\begin{matrix}α = a cos \left(\frac{{P}_{2 y} - Y - R}{R - Car Width / 2 - Safe Margin}\right) \\ {StoP}_{x} = \left(R-Car Width/2-Safe Margin\right) * sin \left(α\right) + {P}_{2 x} \\ {StoP}_{y} = Y\end{matrix} ,$ wherein R is the minimum turning radius calculated in the above formula, X, Y is current vehicle coordinates, CarWidth is a width of the vehicle, and SafeMargin is a safety threshold.

5. The path planning method for autonomous parking in perpendicular and diagonal parking spaces according to claim 1, wherein in step (4), the back-in path is calculated using the geometric method according to a current parking space size, a current vehicle position, and the target parking position; a one-step back-in trajectory is generated if the target parking position is reachable from the current vehicle position using geometric line segments of a linear arc straight line without colliding with parking space boundaries; otherwise, the arc is planned based on the point coordinates P2, with point coordinates P1 and P3 of the parking space boundaries as end constraints.

6. The path planning method for autonomous parking in perpendicular and diagonal parking spaces according to claim 1, wherein in step (4), according to the current parking space size, a current vehicle stopping point position, and the target parking position, an optimal path is searched by traversing turning radius and taking a shortest path as a cost function.

7. An electronic device for implementing a path planning method for autonomous parking in perpendicular and diagonal parking spaces, comprising a memory, configured to store executable instructions; and
a processor, configured to execute the executable instructions stored in the memory to implement the method according to any one of claims 1 to 6.

8. A computer-readable storage medium storing thereon computer program instructions, the computer program instructions executing the method according to any one of claims 1 to 6.

## Patentansprüche

1. Pfadplanungsverfahren zum autonomen Parken in senkrechten und schrägen Parklücken, umfassend die folgenden Schritte:
(1) Verarbeiten, nachdem eine Parklücke gefunden wurde, anfänglich erfasster Hindernisinformationen auf Grundlage einer Eingabe einer Ultraschallwelle - und einer Kameraeingabe, um vier Punktkoordinaten einer viereckigen Parklücke und eine Zielparkposition zu erhalten, wobei die vier Punktkoordinaten der viereckigen Parklücke als P1, P2, P3 und P4 festgelegt werden;
(2) Erstellen, auf Grundlage des Ackermann-Lenkprinzips, eines fahrdynamischen Modells, um einen minimalen Wenderadius *Rₘᵢₙ* eines Fahrzeugs zu erhalten, wobei bei der Pfadplanung *R* = *R*ₘᵢₙ + *R*_{margin} angesetzt wird und *R*_{margin} ein Kalibrierwert ist;
(3) Aktivieren eines Pfadplanungssystems, falls das Fahrzeug einen Haltepunkt erreicht, und Durchführen einer Pfadplanung und einer Pfadverfolgung;
(4) Berechnen eines Rückwärtseinparkpfads gemäß den anfänglich erfassten Informationen und einer Lage (X, Y, θ) des Fahrzeugs unter Verwendung eines geometrischen Verfahrens; und
(5) Identifizieren einer abschließenden Rückwärtseinparkphase, Aktualisieren der Zielparkposition gemäß in Echtzeit erfassten Informationen und Starten einer Echtzeitplanung,
wobei in Schritt (5) die abschließende Rückwärtseinparkphase identifiziert wird, indem bestimmt wird, ob eine Endposition eines Rückwärtspfads mit der während der Planung gespeicherten Zielparkposition übereinstimmt,
wobei in Schritt (5), wenn sich der Parkvorgang in der abschließenden Rückwärtseinparkphase befindet, nachdem eine Hinterachse des Fahrzeugs rückwärts eingefahren ist, Fehler der zuvor geplanten Trajektorie durch Vergleichen einer gemäß den in Echtzeit erfassten Informationen berechneten neuesten Zielparkposition mit der gespeicherten Zielparkposition bestimmt werden; wobei, wenn die Fehler groß sind, die neueste Zielparkposition aktualisiert und ein Flag zum Starten der Echtzeitplanung ausgegeben wird; und wobei der Pfad gemäß der aktuellen Fahrzeugposition, der neuesten Zielparkposition und einer Erfassungsentfernung eines Ultraschallradars unter Verwendung einer geometrischen Beziehung neu geplant wird, unter der Planungsnebenbedingungen, dass die Zielparkposition nicht mit den Parklückenbegrenzungen kollidiert.

2. Pfadplanungsverfahren zum autonomen Parken in senkrechten und schrägen Parklücken nach Anspruch 1, wobei in Schritt (1) die Zielparkposition innerhalb der Parklücke angeordnet und von einem Rand der Parklücke beabstandet ist.

3. Pfadplanungsverfahren zum autonomen Parken in senkrechten und schrägen Parklücken nach Anspruch 1, wobei in Schritt (2) der minimale Wenderadius Rmin des Fahrzeugs wie folgt berechnet wird:
${R}_{min} = \frac{L}{tan \left({θ}_{max}\right)}$, wobei *L* der Radstand ist, *θₘₐₓ* einen maximalen Vorderradlenkwinkel des Fahrzeugs bezeichnet, *Rₘᵢₙ* den minimalen Wenderadius bezeichnet und *R_{margin}* 20 cm bis 100 cm beträgt.

4. Pfadplanungsverfahren zum autonomen Parken in senkrechten und schrägen Parklücken nach Anspruch 1, wobei in Schritt (4) ein Rückwärtseinpark-Haltepunkt *StopP,* der ein rückwärtiges Einparken in den Stellplatz ermöglicht, gemäß einer aktuellen Fahrzeugposition und aktuellen Parklückeninformationen wie folgt bestimmt wird: $α = acos \left(\frac{{P}_{2 Y} - Y - R}{R - CarWidth / 2 - SafeMargin}\right)$ ${StopP}_{X} = \left(R-CarWidth/2-SafeMargin\right) ∗ sin \left(α\right) + {P}_{2 X}$ ${StopP}_{Y} = Y ,$ wobei R der in der vorstehenden Formel berechnete minimale Wenderadius ist, *X* und *Y* aktuelle Fahrzeugkoordinaten sind, *CarWidth* eine Breite des Fahrzeugs ist und *SafeMargin* ein Sicherheitsschwellenwert ist.

5. Pfadplanungsverfahren zum autonomen Parken in senkrechten und schrägen Parklücken nach Anspruch 1, wobei in Schritt (4) der Rückwärtseinparkpfad unter Verwendung des geometrischen Verfahrens gemäß einer aktuellen Parklückengröße, einer aktuellen Fahrzeugposition und der Zielparkposition berechnet wird; wobei eine einstufige Rückwärtseinparktrajektorie erzeugt wird, wenn die Zielparkposition von der aktuellen Fahrzeugposition aus unter Verwendung geometrischer Segmente aus Gerade, Bogen und Gerade erreichbar ist, ohne mit den Parklückenbegrenzungen zu kollidieren; und wobei andernfalls der Bogen auf Grundlage der Punktkoordinaten P2 geplant wird, wobei die Punktkoordinaten P1 und P3 der Parklückenbegrenzungen als Endbedingungen verwendet werden.

6. Pfadplanungsverfahren zum autonomen Parken in senkrechten und schrägen Parklücken nach Anspruch 1, wobei in Schritt (4) gemäß der aktuellen Parklückengröße, einer aktuellen Position des Fahrzeughaltepunkts und der Zielparkposition durch Durchlaufen von Wenderadien nach einem optimalen Pfad gesucht wird, wobei ein kürzester Pfad als Kostenfunktion verwendet wird.

7. Elektronische Vorrichtung zum Implementieren eines Pfadplanungsverfahrens zum autonomen Parken in senkrechten und schrägen Parklücken, umfassend:
einen Speicher, der dazu eingerichtet ist, ausführbare Anweisungen zu speichern; und
einen Prozessor, der dazu eingerichtet ist, die in dem Speicher gespeicherten ausführbaren Anweisungen auszuführen, um das Verfahren nach einem der Ansprüche 1 bis 6 zu implementieren.

8. Computerlesbares Speichermedium, auf dem Computerprogrammanweisungen gespeichert sind, wobei die Computerprogrammanweisungen bei ihrer Ausführung die Durchführung des Verfahrens nach einem der Ansprüche 1 bis 6 bewirken.

## Revendications

1. Procédé de planification de trajectoire à des fins de stationnement autonome dans des places de stationnement perpendiculaires et diagonales, comprenant les étapes suivantes :
(1) traiter, après qu'une place de stationnement a été trouvée, des informations d'obstacle initialement détectées sur la base d'une entrée d'une onde ultrasonore et d'une caméra, afin d'obtenir quatre coordonnées de points d'une place de stationnement quadrilatérale et une position de stationnement cible, les quatre coordonnées de points de la place de stationnement quadrilatérale étant définies comme P1, P2, P3 et P4 ;
(2) établir, sur la base du principe de direction d'Ackermann, un modèle de dynamique du véhicule afin d'obtenir un rayon de braquage minimal *Rₘᵢₙ* d'un véhicule, la planification de trajectoire utilisant *R* = *Rₘᵢₙ* + *R*_{margin}, *R*_{margin} étant une valeur d'étalonnage ;
(3) activer, lorsque le véhicule atteint un point d'arrêt, un système de planification de trajectoire, et e,ectuer une planification de trajectoire et un suivi de trajectoire;
(4) calculer, selon les informations initialement détectées et une attitude (X, Y, θ) du véhicule, une trajectoire de stationnement en marche arrière à l'aide d'un procédé géométrique ; et
(5) identifier une phase finale de stationnement en marche arrière, mettre à jour la position de stationnement cible selon des informations détectées en temps réel et démarrer une planification en temps réel,
dans lequel, à l'étape (5), la phase finale de stationnement en marche arrière est identifiée en déterminant si une position finale d'une trajectoire en marche arrière correspond à la position de stationnement cible stockée au cours de la planification,
dans lequel, à l'étape (5), lorsque le stationnement se trouve dans la phase finale de stationnement en marche arrière, des erreurs de trajectoire précédemment planifiées sont déterminées, après l'entrée en marche arrière de l'essieu arrière du véhicule, en comparant une position de stationnement cible la plus récente, calculée selon les informations détectées en temps réel, à la position de stationnement cible stockée ; si les erreurs sont importantes, la position de stationnement cible la plus récente est mise à jour et un indicateur de démarrage de la planification en temps réel est délivré ; selon la position actuelle du véhicule, la position de stationnement cible la plus récente et une distance de détection d'un radar à ultrasons, la trajectoire est replanifié à l'aide d'une relation géométrique, avec des conditions de contrainte de planification selon lesquelles la position de stationnement cible n'entre pas en collision avec les limites de la place de stationnement.

2. Procédé de planification de trajectoire à des fins de stationnement autonome dans des places de stationnement perpendiculaires et diagonales selon la revendication 1, dans lequel, à l'étape (1), la position de stationnement cible est située à l'intérieur de la place de stationnement et espacée d'un bord de la place de stationnement.

3. Procédé de planification de trajectoire à des fins de stationnement autonome dans des places de stationnement perpendiculaires et diagonales selon la revendication 1, dans lequel, à l'étape (2), le rayon de braquage minimal *Rₘᵢₙ* du véhicule est déterminé par résolution comme suit : ${R}_{min} = \frac{L}{tan \left({θ}_{max}\right)} ,$ dans lequel *L* est l'empattement *θₘₐₓ* représente un angle maximal de braquage des roues avant du véhicule, *Rₘᵢₙ* représente le rayon de braquage minimal et *R_{margin}* est compris entre 20 cm et 100 cm.

4. Procédé de planification de trajectoire à des fins de stationnement autonome dans des places de stationnement perpendiculaires et diagonales selon la revendication 1, dans lequel, à l'étape (4), un point d'arrêt de stationnement en marche arrière StopP permettant un stationnement en marche arrière dans une place de stationnement est calculé selon une position actuelle du véhicule et des informations actuelles relatives à la place de stationnement, comme suit : $α = acos \left(\frac{{P}_{2 Y} - Y - R}{R - CarWidth / 2 - SafeMargin}\right)$ ${StopP}_{X} = \left(R-CarWidth/2-SafeMargin\right) ∗ sin \left(α\right) + {P}_{2 X}$ ${StopP}_{Y} = Y ,$ dans lequel *R* est le rayon de braquage minimal calculé dans la formule ci-dessus, *X* et *Y* sont des coordonnées actuelles du véhicule, *CarWidth* est une largeur du véhicule et *SafeMargin* est un seuil de sécurité.

5. Procédé de planification de trajectoire à des fins de stationnement autonome dans des places de stationnement perpendiculaires et diagonales selon la revendication 1, dans lequel, à l'étape (4), la trajectoire de stationnement en marche arrière est calculé à l'aide du procédé géométrique selon une taille actuelle de la place de stationnement, une position actuelle du véhicule et la position de stationnement cible ; une trajectoire de stationnement en marche arrière en une seule étape est générée si la position de stationnement cible peut être atteinte depuis la position actuelle du véhicule au moyen de segments de ligne géométriques formés d'une ligne, d'un arc et d'une ligne droite, sans entrer en collision avec les limites de la place de stationnement ; sinon, l'arc est planifié sur la base des coordonnées du point P2, les coordonnées des points P1 et P3 des limites de la place de stationnement étant utilisées comme contraintes d'extrémité.

6. Procédé de planification de trajectoire à des fins de stationnement autonome dans des places de stationnement perpendiculaires et verticales selon la revendication 1, dans lequel, à l'étape (4), selon la taille actuelle de la place de stationnement, une position actuelle du point d'arrêt du véhicule et la position de stationnement cible, une trajectoire optimale est recherchée en parcourant des rayons de braquage et en utilisant une trajectoire la plus courte comme fonction de coût.

7. Dispositif électronique destiné à mettre en œuvre un procédé de planification de trajectoire à des fins de stationnement autonome dans des places de stationnement perpendiculaires et verticales, comprenant :
une mémoire configurée pour stocker des instructions exécutables ; et
un processeur configuré pour exécuter les instructions exécutables stockées dans la mémoire afin de mettre en œuvre le procédé selon l'une quelconque des revendications 1 à 6.

8. Support de stockage lisible par ordinateur sur lequel sont stockées des instructions de programme informatique, l'exécution des instructions de programme informatique mettant en œuvre le procédé selon l'une quelconque des revendications 1 à 6.
